# EUROPEAN PATENT APPLICATION

(11) **EP 2 827 648 A1**
(43) Date of publication of application: **21.01.2015**
(21) Application number: 12871501.8
(22) Date of filing: 29.06.2012
(51) Int. Cl.: H04W 48/18

(54) **METHOD AND DEVICE FOR ACCELERATING TERMINAL STARTUP RESIDENCE AND REGISTRATION PROCESS**

(30) Priority: 16.03.2012 CN 201210069787
(71) Applicant: ZTE Corporation, Shenzhen, Guangdong 518057 (CN)
(72) Inventor: WANG, Li, Shenzhen Guangdong 518057 (CN); HUA, Jie, Shenzhen Guangdong 518057 (CN)
(74) Representative: Rapisardi, Mariacristina
(86) International application number: PCT/CN2012/077931
(87) International publication number: WO 2013/135025

(57) **Abstract**

Provided are a method and apparatus for accelerating a camp and registration process during terminal startup. In the method, during startup, an operation of selecting network camp and an operation of initializing a card are simultaneously performed; and according to network information obtained after initializing the card, it is determined to continue camping and registering, or to reselect a network on which to camp and then register, or to directly perform registration on the network on which the terminal has already camped. The present invention can accelerate a camp and registration process during terminal startup, and reduce the time needed from startup to normal service operation, so that a terminal can support an emergency call or a regular service as soon as possible, thereby increasing the satisfaction of a user when using the terminal.

## Description

### Technical Field

The present invention relates to mobile communication technologies, and particularly to a method and apparatus for accelerating a camp and registration process during terminal startup.

### Background

Currently, during startup, a terminal usually undergoes a series of startup procedures such as opening radio frequency, initiating a card, selecting network camp and registering and so on. Since the process of selecting network camp needs some related network and cell information in the card, a serial startup procedure of first initializing the card and then selecting network camp is employed. However, due to the complexity of card application, the time for the terminal to initialize the card is usually very long, which delays the time to camp and register, resulting in that the time for the terminal to start up and perform a service normally is very long.

### Summary

In order to solve the above-mentioned problem, the embodiments of the present invention provide a method and apparatus for accelerating a camp and registration process during terminal startup, which can accelerate a camp and registration process during terminal startup and reduce the time needed from startup to normal service operation.

The method for accelerating a camp and registration process during terminal startup in an embodiment of the present invention includes: during startup, simultaneously performing an operation of selecting network camp and an operation of initializing a card; and
according to network information obtained after initializing the card, determining to continue camping and registering, or to reselect a network on which to camp and then register, or to directly perform registration on a network on which the terminal has already camped.

In the described embodiment, after simultaneously performing the operation of selecting network camp and the operation of initializing the card, the method further includes:
judging whether the operation of selecting network camp is finished first or the operation of initializing the card is finished first,
when the operation of selecting network camp is finished first, at the time the operation of initializing the card is finished, determining, by judging whether registered network and cell information obtained from the card is consistent with a currently camped network and cell information, to reselect a network on which to camp and then register, or to directly perform registration on the network which the terminal has already camped;
when the operation of initializing a card is finished first, determining, by judging whether the registered network and cell information obtained from the card is consistent with current trying-to-camp network and cell information, to continue camping and registering, or to reselect a network on which to camp and then register.

In the described embodiment, determining, by judging whether registered network and cell information obtained from the card is consistent with a currently camped network and cell information, to reselect a network on which to camp and then register, or to directly perform registration on the network on which the terminal has already camped includes:
obtaining the registered network and cell information from the card, and judging whether the registered network and cell information obtained from the card is consistent with the currently camped network and cell information,
if the registered network and cell information obtained from the card is consistent with the currently camped network and cell information, initiating a registration process in a currently camped cell; and
if the registered network and cell information obtained from the card is inconsistent with the currently camped network and cell information, performing camp again using the registered network and cell information obtained from the card and initiating a registration process in a camped cell after the camp succeeds.

In the described embodiment, determining, by judging whether the registered network and cell information obtained from the card is consistent with current trying-to-camp network and cell information, to continue camping and registering, or to reselect a network on which to camp and then register includes:
obtaining the registered network and cell information from the card, and judging whether the registered network and cell information obtained from the card is consistent with the current trying-to-camp network and cell information,
if the registered network and cell information obtained from the card is consistent with the current trying-to-camp network and cell information, continuing to perform network camp and initiating a registration process in a camped cell after the camp succeeds; and
if the registered network and cell information obtained from the card is inconsistent with the current trying-to-camp network and cell information, interrupting a currently undergoing camp, performing camp again using the registered network and cell information obtained from the card and initiating a registration process in a camped cell after the camp succeeds.

In the described embodiment, after simultaneously performing the operation of selecting network camp and the operation of initializing the card, the method further includes:
after the operation of selecting network camp is finished and before the operation of initializing the card is finished, supporting an emergency service.

In the described embodiment, the operation of selecting network camp includes:
performing network camp according to last camped network and cell information before shutdown.

An apparatus for accelerating a camp and registration process during terminal startup provided by another embodiment of the present invention includes a judgment module and an execution module, wherein
the judgment module is configured to, according to network information obtained after initializing a card, determine to continue camping and registering, or to reselect a network on which to camp and then register, or to directly perform registration on a network on which the terminal has already camped; and
the execution module is configured to, during startup, simultaneously perform an operation of selecting network camp and an operation of initializing the card, and perform a corresponding registration operation according to a judgment result of the judgment module.

In the described embodiment, the judgment module is further configured to, after performing the operation of selecting network camp and the operation of initializing the card, judge whether the operation of selecting network camp is finished first or the operation of initializing the card is finished first; if the operation of selecting network camp is finished first, at the time the operation of initializing the card is finished, determine, by judging whether registered network and cell information obtained from the card is consistent with a currently camped network and cell information, to reselect a network on which to camp and then register, or to directly perform registration on the network on which the terminal has already camped; and
if the operation of initializing the card is finished first, determine, by judging whether the registered network and cell information obtained from the card is consistent with current trying-to-camp network and cell information, to continue camping and registering, or to reselect a network on which to camp and then register.

In the described embodiment, the judgment module is further configured to, after network camp is finished first and at the time the operation of initializing the card is finished, obtain registered network and cell information from the card, and judge whether the registered network and cell information obtained from the card is consistent with currently camped network and cell information, and if the registered network and cell information obtained from the card is consistent with currently camped network and cell information, notify the execution module to initiate a registration process in a camped cell; and
if the registered network and cell information obtained from the card is inconsistent with currently camped network and cell information, then notify the execution module to perform camp again using the registered network and cell information obtained from the card and to initiate a registration process in a camped cell after the camp succeeds.

In the described embodiment, the judgment module is further configured to, at the time the operation of initializing the card is finished, obtain registered network and cell information from the card, and judge whether the registered network and cell information obtained from the card is consistent with current trying-to-camp network and cell information, and if the registered network and cell information obtained from the card is consistent with currently camped network and cell information, notify the execution module to continue network camp and to initiate a registration process in a camped cell after network camp succeeds; and
if the registered network and cell information obtained from the card is inconsistent with currently camped network and cell information, then notify the execution module to interrupt a currently undergoing camp, to perform camp again using the registered network and cell information obtained from the card and to initiate a registration process in a camped cell after the camp succeeds.

By virtue of the method and apparatus for accelerating a camp and registration process during terminal startup provided by the embodiments of the present invention, when a terminal starts up, an operation of selecting network camp and an operation of initializing a card are simultaneously performed, and then according to the network information obtained after initializing the card, it is determined to continue camping and registering, or to reselect a network on which to camp and then register, or to directly perform registration on the network on which the terminal has already camped. In this way, emergency call or normal service can be supported as soon as possible, thus improving the satisfaction of a user when using the terminal.

### Brief Description of the Drawings

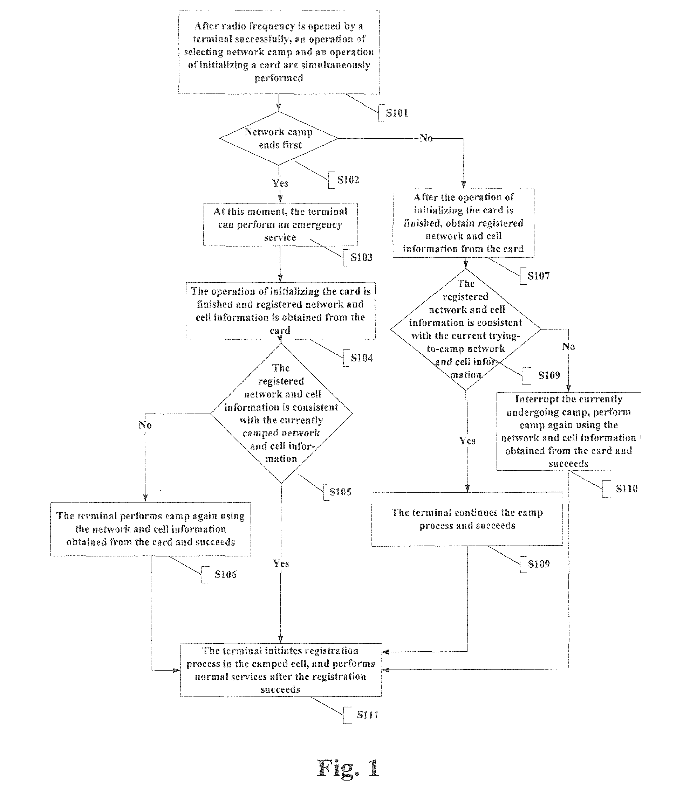

Fig. 1 is a flowchart of an embodiment of a method for accelerating a camp and registration process during terminal startup in the present invention.

### Detailed Description of the Embodiments

The core concept of the embodiments of the present invention is as follows: when a terminal starts up, an operation of selecting network camp and an operation of initializing a card are simultaneously performed, and then according to the network information obtained after initializing the card, it is determined to continue camping and registering, or to reselect a network on which to camp and then register, or to directly perform registration on the network on which the terminal has already camped.

In particular, the method for accelerating a camp and registration process during terminal startup provided in an embodiment of the present invention includes the following steps:
A: after a terminal issues a command of selecting network camp and initialize a card, an operation of selecting network camp and an operation of initializing a card are simultaneously performed, in the example embodiment, when selecting network camp, the terminal performs network camp according to the last camped network and cell information before shutdown;
   it is judged whether the operation of selecting network camp is finished first or the operation of initializing a card is finished first, if the operation of selecting network camp is finished first, then step B is performed; and if the operation of initializing a card is finished first, then step C is performed;
B: when the operation of initializing a card is finished, it is determined, by judging whether the registered network and cell information obtained from the card is consistent with the currently camped network and cell information, to reselect a network on which to camp and then register, or directly perform registration on the network on which the terminal has already camped, and this procedure ends;
C: it is determined, by judging whether the registered network and cell information obtained from the card is consistent with the current trying-to-camp network and cell information, to continue camping and registering, or reselect a network on which to camp and then register, and this procedure ends.

Step B includes the following steps:
B1: when the operation of initializing a card is finished, registered network and cell information is obtained from the card, and it is judged whether the registered network and cell information obtained from the card is consistent with the currently camped network and cell information, if they are consistent, then step B2 is performed; otherwise, the terminal camps using the network and cell information obtained from the card, and then step B2 is performed after the camp succeeds; and
B2: the terminal initiates a registration process in the camped cell.

Step C includes the following steps:
C1: when the operation of initializing a card is finished, registered network and cell information is obtained from the card, and it is judged whether the registered network and cell information obtained from the card is consistent with the current trying-to-camp network and cell information, if they are consistent, then step C2 is performed; otherwise, the terminal interrupts the currently undergoing camp, camps again using the network and cell information obtained from the card, and then step C3 is performed after the camp succeeds;
C2: the terminal continues network camp, and step C3 is performed after the camp succeeds; and
C3: the terminal initiates a registration process in the camped cell.

The apparatus for accelerating a camp and registration process during terminal startup includes a judgment module and an execution module, wherein the judgment module is configured to, according to the network information obtained after initializing the card, determine to continue camping and registering, or to reselect a network on which to camp and then register, or to directly perform registration on the network on which the terminal has already camped; and
the execution module is configured to, during startup, simultaneously perform an operation of selecting network camp and an operation of initializing a card and perform a corresponding registration operation according to the judgment result of the judgment module, wherein when selecting network camp, network camp is performed according to the last camped network and cell information before shutdown.

The judgment module is further configured to, after performing an operation of selecting network camp and an operation of initializing a card, judge whether the operation of selecting network camp is finished first or the operation of initializing a card is finished first, if the operation of selecting network camp is finished first and at the time the operation of initializing the card is finished, determine, by judging whether the registered network and cell information obtained from the card is consistent with the currently camped network and cell information, to reselect a network on which to camp and then register, or to directly perform registration on the network on which the terminal has already camped; and if the operation of initializing a card is finished first, determine, by judging whether the registered network and cell information obtained from the card is consistent with the current trying-to-camp network and cell information, to continue camping and registering, or to reselect a network on which to camp and then register.

In addition, the judgment module is further configured to, after network camp is finished first and at the time the operation of initializing a card is finished, obtain registered network and cell information from the card, and judge whether the registered network and cell information obtained from the card is consistent with the currently camped network and cell information, and if they are consistent, notify the execution module to initiate a registration process in the camped cell; and if they are inconsistent, then notify the execution module to perform camp again using the registered network and cell information obtained from the card and to initiate a registration process in the camped cell after the camp succeeds.

In addition, the judgment module is further configured to, at the time the operation of initializing a card is finished, obtain registered network and cell information from the card, and judge whether the registered network and cell information obtained from the card is consistent with the current trying-to-camp network and cell information, and if they are consistent, notify the execution module to continue network camp and to initiate a registration process in the camped cell after network camp succeeds; and if they are inconsistent, then notify the execution module to interrupt the currently undergoing camp, to perform camp again using the registered network and cell information obtained from the card and to initiate a registration process in the camped cell after the camp succeeds.

Hereinafter, an embodiment of the method for accelerating a camp and registration process during terminal startup in the present invention will be introduced with reference to Fig. 1.

As shown in Fig. 1, the method for accelerating a camp and registration process during terminal startup in the embodiment of the present invention includes the following steps:
step S101: after radio frequency is opened successfully, a command of selecting network camp and initializing a card is issued, an operation of selecting network camp and an operation of initializing the card are simultaneously performed;
step S102: it is judged whether the operation of selecting network camp is finished first or the operation of initializing a card is finished first, and if the operation of selecting network camp is finished first, then step S103 is performed; and if the operation of initializing a card is finished first, then step S107 is performed;
step S103: after selecting network camp is finished, the currently camped network and cell information is stored;
after selecting network camp is finished, an emergency service may be supported, for example, an emergency service such as calling 110 and so on may be supported.
Step S104: after initializing the card is finished, the registered network and cell information is obtained from the card;
step S105: it is judged whether the registered network and cell information obtained from the card is consistent with the currently camped network and cell information, if yes, then step S111 is performed; otherwise, step S106 is performed;
step S106: camp is performed again using the network and cell information obtained from the card and step S111 is performed after the camp succeeds;
step S107: after initializing the card is finished, the registered network and cell information is obtained from the card;
step S108: it is judged whether the registered network and cell information obtained from the card is consistent with the current trying-to-camp network and cell information, if yes, then step S109 is performed; otherwise, step S110 is performed;
step S109: network camp is continued, and step S111 is performed after the camp succeeds;
step S110: the current trying-to-camp process is interrupted, camp is performed again using the network and cell information obtained from the card and step S111 is performed after the camp succeeds; and
step S111: a registration process is initiated in the camped cell; and
a normal service may be performed after the registration succeeds.

In summary, according to the method and apparatus for accelerating a camp and registration process during terminal startup, when a terminal starts up, an operation of selecting network camp and an operation of initializing a card are simultaneously performed, and then according to the network information obtained after initializing the card, it is determined to continue camping and registering, or to reselect a network on which to camp and then register, or to directly perform registration on the network on which the terminal has already camped. In this way, emergency call or normal service can be supported as soon as possible, thus improving the satisfaction of a user when using the terminal.

The foregoing is detailed description of the present invention for the sake of enabling those skilled in the art to understand the present invention, however, it can be conceived that other variations and modifications can be made without departing from the scope covered by the claims of the present invention, and all of these variations and modifications fall into the scope of protection of the present invention.

## Claims

1. A method for accelerating a camp and registration process during terminal startup, **characterized by** comprising:
during startup, simultaneously performing an operation of selecting network camp and an operation of initializing a card; and
according to network information obtained after initializing the card, determining to continue camping and registering, or to reselect a network on which to camp and then register, or to directly perform registration on a network on which the terminal has already camped.

2. The method as claimed in claim 1, **characterized in that** after simultaneously performing the operation of selecting network camp and the operation of initializing the card, the method further comprises:
judging whether the operation of selecting network camp is finished first or the operation of initializing the card is finished first,
when the operation of selecting network camp is finished first, at the time the operation of initializing the card is finished, determining, by judging whether registered network and cell information obtained from the card is consistent with a currently camped network and cell information, to reselect a network on which to camp and then register, or to directly perform registration on the network on which the terminal has already camped;
when the operation of initializing a card is finished first, determining, by judging whether the registered network and cell information obtained from the card is consistent with current trying-to-camp network and cell information, to continue camping and registering, or to reselect a network on which to camp and then register.

3. The method as claimed in claim 2, **characterized in that** determining, by judging whether registered network and cell information obtained from the card is consistent with a currently camped network and cell information, to reselect a network on which to camp and then register, or to directly perform registration on the network on which the terminal has already camped comprises:
obtaining the registered network and cell information from the card, and judging whether the registered network and cell information obtained from the card is consistent with the currently camped network and cell information,
if the registered network and cell information obtained from the card is consistent with the currently camped network and cell information, initiating a registration process in a currently camped cell; and
if the registered network and cell information obtained from the card is inconsistent with the currently camped network and cell information, performing camp again using the registered network and cell information obtained from the card and initiating a registration process in a camped cell after the camp succeeds.

4. The method as claimed in claim 2, **characterized in that** determining, by judging whether the registered network and cell information obtained from the card is consistent with current trying-to-camp network and cell information, to continue camping and registering, or to reselect a network on which to camp and then register comprises:
obtaining the registered network and cell information from the card, and judging whether the registered network and cell information obtained from the card is consistent with the current trying-to-camp network and cell information,
if the registered network and cell information obtained from the card is consistent with the current trying-to-camp network and cell information, continuing to perform network camp and initiating a registration process in a camped cell after the camp succeeds; and
if the registered network and cell information obtained from the card is inconsistent with the current trying-to-camp network and cell information, interrupting a currently undergoing camp, performing camp again using the registered network and cell information obtained from the card and initiating a registration process in a camped cell after the camp succeeds.

5. The method as claimed in any one of claims 1 to 4, **characterized in that** after simultaneously performing the operation of selecting network camp and the operation of initializing the card, the method further comprises:
after the operation of selecting network camp is finished and before the operation of initializing the card is finished, supporting an emergency service.

6. The method as claimed in claim 1, **characterized in that** the operation of selecting network camp comprises:
performing network camp according to last camped network and cell information before shutdown.

7. An apparatus for accelerating a camp and registration process during terminal startup, **characterized by** comprising a judgment module and an execution module, wherein
the judgment module is configured to, according to network information obtained after initializing a card, determine to continue camping and registering, or to reselect a network on which to camp and then register, or to directly perform registration on a network on which the terminal has already camped; and
the execution module is configured to, during startup, simultaneously perform an operation of selecting network camp and an operation of initializing the card, and perform a corresponding registration operation according to a judgment result of the judgment module.

8. The apparatus as claimed in claim 7, **characterized in that**
the judgment module is further configured to, after performing the operation of selecting network camp and the operation of initializing the card, judge whether the operation of selecting network camp is finished first or the operation of initializing the card is finished first; if the operation of selecting network camp is finished first, at the time the operation of initializing the card is finished, determine, by judging whether registered network and cell information obtained from the card is consistent with a currently camped network and cell information, to reselect a network on which to camp and then register, or to directly perform registration on the network on which the terminal has already camped; and
if the operation of initializing the card is finished first, determine, by judging whether the registered network and cell information obtained from the card is consistent with current trying-to-camp network and cell information, to continue camping and registering, or to reselect a network on which to camp and then register.

9. The apparatus as claimed in claim 8, **characterized in that**
the judgment module is further configured to, after network camp is finished first and at the time the operation of initializing the card is finished, obtain registered network and cell information from the card, and judge whether the registered network and cell information obtained from the card is consistent with currently camped network and cell information, and if the registered network and cell information obtained from the card is consistent with currently camped network and cell information, notify the execution module to initiate a registration process in a camped cell; and
if the registered network and cell information obtained from the card is inconsistent with currently camped network and cell information, then notify the execution module to perform camp again using the registered network and cell information obtained from the card and to initiate a registration process in a camped cell after the camp succeeds.

10. The apparatus as claimed in claim 8, **characterized in that**
the judgment module is further configured to, at the time the operation of initializing the card is finished, obtain registered network and cell information from the card, and judge whether the registered network and cell information obtained from the card is consistent with current trying-to-camp network and cell information, and if the registered network and cell information obtained from the card is consistent with currently camped network and cell information, notify the execution module to continue network camp and to initiate a registration process in a camped cell after network camp succeeds; and
if the registered network and cell information obtained from the card is inconsistent with currently camped network and cell information, then notify the execution module to interrupt a currently undergoing camp, to perform camp again using the registered network and cell information obtained from the card and to initiate a registration process in a camped cell after the camp succeeds.
